# EUROPÄISCHE PATENTSCHRIFT

(11) **EP 2 196 379 B1**
(45) Veröffentlichungstag und Bekanntmachung des Hinweises auf die Patenterteilung: **01.08.2012**
(21) Anmeldenummer: 09090016.8
(22) Anmeldetag: 30.09.2009
(51) Int. Cl.: B62D 6/04, B60G 17/0165

(54) **Elektromechanische Lenkung und Verfahren zur Bestimmung eines Fahrwegzustands**
Electromechanical steering and method for determining the status of a route
Orientation électromécanique et procédé de détermination d'un état de voie de circulation

(30) Priorität: 10.12.2008 DE 102008061696
(43) Veröffentlichungstag der Anmeldung: 16.06.2010
(73) Patentinhaber: Volkswagen Aktiengesellschaft, 38440 Wolfsburg (DE)
(72) Erfinder: Busse, Carsten, 38444 Wolfsburg (DE)
(74) Vertreter: Patentanwälte Bressel und Partner

(56) Entgegenhaltungen:
- EP-A- 1 468 898
- DE-A1- 19 935 805
- JP-A- 2007 269 251
- US-A- 4 984 163
- US-A1- 2001 029 421

## Beschreibung

Die Erfindung betrifft eine elektromechanische Lenkung sowie ein Verfahren zur Bestimmung eines Fahrwegzustands.

Die Kenntnis des Fahrwegzustands ist für viele Systeme eines Kraftfahrzeugs von Interesse.

EP 1 468 898 A2 offenbart eine Lenkung gemäß den Oberbegriffen der Ansprüche 1 und 4.

Aus der DE 199 23 484 A1 ist ein Verfahren und eine Vorrichtung zur Einstellung der Dämpfung eines Kraftfahrzeugs bekannt, mit einer Messeinrichtung für die Beschaffenheit des Fahrweges in einem von dem Kraftfahrzeug beabstandeten Bereich, einem Generator, der mit der Messeinrichtung verbunden ist und aus den gemessenen Signalen ein Steuersignal generiert und mit einer auf das Steuersignal ansprechenden Steuereinrichtung für die Dämpfung des Fahrwerks verbunden ist, wobei die Steuereinrichtung ein Verzögerungselement aufweist, das die Einstellung der Dämpfung abhängig von der Fahrzeuggeschwindigkeit derart verzögert, dass die eingestellte Dämpfung der aktuellen Fahrwegbeschaffenheit entspricht. Die Messeinrichtung ist dabei vorzugsweise als Radareinrichtung ausgebildet.

Aus der EP 0 775 624 B1 ist ein Lenksystem für ein Kraftfahrzeug bekannt, das einen elektrischen Servomotor umfasst. Dabei wird durch Auswertung des Motorstroms auf den Fahrwegzustand geschlossen.

Der Erfindung liegt das technische Problem zugrunde, eine elektromechanische Lenkung zu schaffen sowie ein Verfahren zur Bestimmung eines Fahrwegzustands bereitzustellen, mittels derer der Fahrwegzustand besser ermittelt werden kann.

Die Lösung des technischen Problems ergibt sich durch die Gegenstände mit den Merkmalen der Ansprüche 1 und 4. Weitere vorteilhafte Ausgestaltungen der Erfindung ergeben sich aus den Unteransprüchen.

Hierzu umfasst die elektromechanische Lenkung einen elektrischen Servomotor, mindestens einen Motorlagesensor, mittels dessen eine Rotorlage des Servomotors erfasst wird, und eine Auswerte- und Steuereinheit, wobei mittels des Motorlagesensors Änderungen der Rotorlage erfasst werden, die unabhängig von Lenkeingaben eines Fahrers auftreten, wobei anhand der aufgetretenen Änderungen der Rotorlage ein Fahrwegzustand bestimmt wird wobei in Abhängigkeit des ermittelten Fahrwegzustands das elektromechanische Lenksystem und/oder andere Fahrzeugsysteme adaptiert werden, wobei zusätzlich zu den aufgetretenen Änderungen der Rotorlage die Fahrzeuggeschwindigkeit, die Gierrate und das Handlenkmoment berücksichigt werden. Dabei kann beispielsweise vorgesehen sein, anhand charakteristischer Merkmale den Fahrwegzustand zu klassifizieren. Beispiele für solche Klassen sind Querfugen, Kopfsteinpflaster, Bodenwellen, Schlaglöcher etc. Die Auswertung kann dabei an dem Zeitsignal der Winkeländerung des Motorlagesensors erfolgen und/oder an abgeleiteten Funktionen wie beispielsweise Ableitungen.

Vorzugsweise erfolgt eine Frequenzanalyse der Zeitsignale beispielsweise mittels FFT, wobei dann eine Auswertung anhand der Frequenzlage bzw. den Amplituden bei den einzelnen Frequenzlagen erfolgen kann.

In einer weiteren bevorzugten Ausführungsform werden zusätzlich die Umgebungstemperatur des Fahrzeugs und/oder Informationen über die Regenmenge berücksichtigt. Die Fahrzeuggeschwindigkeit macht sich beispielsweise In zweifacher Hinsicht in den Zeitsignalen der Winkeländerungen bemerkbar, nämlich in der Größe der Amplitude und in dem zeitlichen Abstand. Mittels der Umgebungstemperatur kann beispielsweise auf Eisbildung geschlossen werden. Anhand der Gierrate bzw. daran abgeleiteten Größen lassen sich ebenfalls Rückschlüsse auf den Fahrwegzustand ziehen. Das Handlenkmoment des Fahrers wiederum sollte vorzugsweise bekannt sein, um die Winkeländerung aufgrund der Fahrbahnbeschaffenheit herauszufiltern. Andererseits geben die Gegenreaktionen des Fahrers auch Informationen über die Art der Störanregungen. Die Informationen über die Regenmenge liefert Rückschlüsse auf die Fahrbahnbeschaffenheit wie beispielsweise Aquaplaning. Die Regenmenge kann beispielsweise mittels eines Regensensors und/oder durch die Auswertung der eingestellten Wischerstufe ermittelt werden.

Die Erfindung wird nachfolgend anhand eines bevorzugten Ausführungsbeispieles näher erläutert. Die Fig. zeigen:
- Fig. 1: ein schematisches Blockschaltbild von Teilen eines elektromechanischen Lenksystems und
- Fig. 2a-d: verschiedene beispielhafte Winkeländerungen über der Zeit in Abhängigkeit vom Fahrweg.

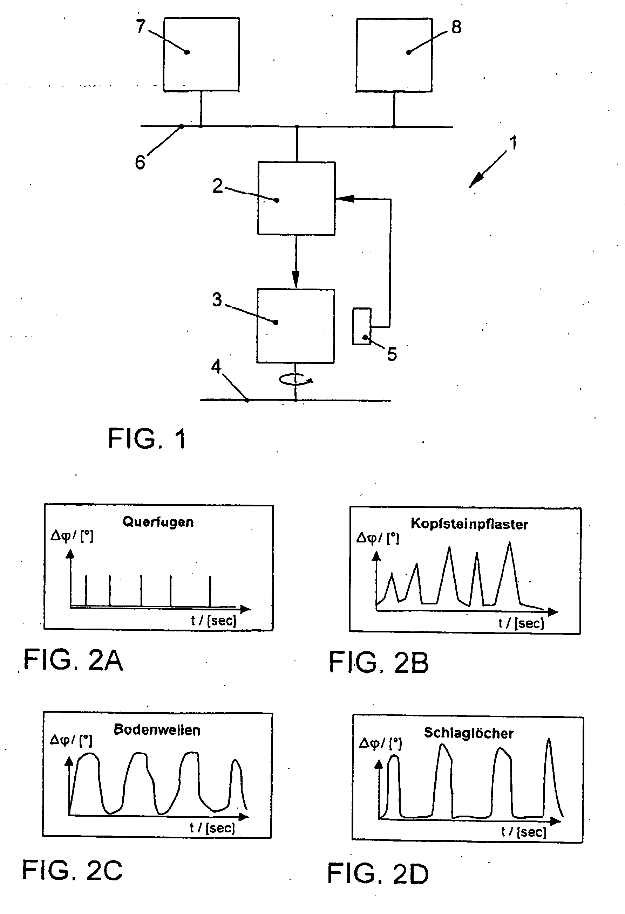

Das Lenksystem 1 umfasst ein Steuergerät 2, das über eine Leistungselektronik mit einem elektrischen Servomotor 3 verbunden ist. Die Abtriebswelle des elektrischen Servomotors 3 ist entweder direkt oder über ein geeignetes Getriebe mit einer Zahnstange 4 verbunden, über die die Lenkbewegungen an die Fahrzeugräder übertragen werden. Dem elektrischen Servomotor 3 ist ein Motorlagesensor 5 zugeordnet, mittels dessen die Rotorlage des Servomotors 3 bestimmt werden kann. Der Motorlagesensor 5 ist beispielsweise als Resolver ausgebildet. Über einen Bus 6 ist das Steuergerät 2 mit weiteren Steuergeräten 7, 8 verbunden. Aufgrund von Störanregungen von der Fahrbahn, die über die Zahnstange 4 auf den Servomotor 3 übertragen werden, wird der Rotor in seiner Position geändert, ohne dass ein Steuerstrom von der Leistungselektronik zum Servomotor 3 fließt. Beispielhafte Zeitverläufe der Winkeländerung Δϕ sind in den Fig. 2a-d dargestellt. Der Motorlagesensor 5 überträgt seine Signale an das Steuergerät 2. Dort werden die Signale des Motorlagesensors 5 unter Berücksichtigung weiterer Daten ausgewertet, wobei die weiteren Daten von anderen Steuergeräten über den Bus 6 übertragen werden oder aber direkt dem Steuergerät 2 zugeführt werden. Die weiteren Daten sind vorzugsweise die Fahrzeuggeschwindigkeit, die Umgebungstemperatur, ein Handlenkmoment, eine Gierrate und die Regenmenge. Anhand charakteristischer Merkmale ordnet dann das Steuergerät den Signalen einen Fahrweg zu, beispielsweise Kopfsteinpflaster. Diese Information über den Fahrwegzustand wird dann genutzt, um beispielsweise das Lenksystem 1 selber oder aber andere Systeme wie beispielsweise die Dämpfung adaptiv einzustellen. So kann beispielsweise die Federung der Dämpfung von hart auf weich oder umgekehrt eingestellt werden.

## Patentansprüche

1. Elektromechanische Lenkung, umfassend einen elektrischen Servomotor, mindestens einen Motorlagesensor, mittels dessen eine Rotorlage des Servomotors erfasst wird, und eine Auswerte- und Steuereinheit, wobei mittels des Motorlagesensors (5) Änderungen der Rotorlage erfasst werden, die unabhängig von Lenkeingaben eines Fahrers auftreten, wobei
anhand der aufgetretenen Änderungen der Rotorlage ein Fahrwegzustand klassifiziert wird, wobei in Abhängigkeit des ermittelten Fahrwegzustands das elektromechanische Lenksystem (1) und/oder andere Fahrzeugsysteme adaptiert werden **dadurch gekennzeichnet, dass** zusätzlich zu den aufgetretenen Änderungen der Rotorlage die Fahrzeuggeschwindigkeit, die Gierrate und das Handlenkmoment des Fahrers berücksichtigt werden.

2. Elektromechanische Lenkung nach Anspruch 1, **dadurch gekennzeichnet, dass** die zeitlichen Änderungen der Rotorlage einer Frequenzanalyse unterzogen werden.

3. Elektromechanische Lenkung nach Anspruch 1 oder 2, **dadurch gekennzeichnet, dass** weiter zusätzlich die Umgebungstemperatur des Fahrzeugs und/oder Informationen über die Regenmenge berücksichtigt werden.

4. Verfahren zur Bestimmung eines Fahrwegzustandes eines Kraftfahrzeugs, mittels einer elektromechanischen Lenkung mit einem Servomotor, mindestens einem Motorlagesensor, mittels dessen eine Rotorlage des Servomotors erfasst wird, und einer Auswerte- und Steuereinheit, wobei mittels des Motorlagesensors (5) Änderungen der Rotorlage erfasst werden, die unabhängig von Lenkeingaben eines Fahrers auftreten, wobei
anhand der aufgetretenen Änderungen der Rotorlage ein Fahrwegzustand klassifiziert wird, wobei in Abhängigkeit des ermittelten Fahrwegzustandes das elektromechanische Lenksystem und/oder andere Fahrzeugsysteme adaptiert werden, **dadurch gekennzeichnet, dass** zusätzlich zu den aufgetretenen Änderungen der Rotorlage die Fahrzeuggeschwindigkeit, die Gierrate und das Handlenkmoment des Fahrers berücksichtigt werden.

5. Verfahren nach Anspruch 4, **dadurch gekennzeichnet, dass** die zeitlichen Änderungen der Rotorlage einer Frequenzanalyse unterzogen werden.

6. Verfahren nach Anspruch 4 oder 5, **dadurch gekennzeichnet, dass** weiter zusätzlich die Umgebungstemperatur des Fahrzeugs und/oder Informationen über die Regenmenge berücksichtigt werden.

## Claims

1. Electromechanical steering system, comprising an electric servo motor, at least one motor position sensor by means of which a rotor position of the servo motor is sensed, and an evaluation and control unit, wherein changes in the rotor position which occur independently of a driver's steering inputs are sensed by means of the motor position sensor (5), wherein a route status is classified on the basis of the changes which have occurred in the rotor position, and wherein the electromechanical steering system (1) and/or other vehicle systems are adapted as a function of the status of the route which is determined, **characterized in that**, in addition to the changes which have occurred in the rotor position, the vehicle speed, the yaw rate and the hand steering torque of the driver are taken into account.

2. Electromechanical steering system according to Claim 1, **characterized in that** the changes in the rotor position in time are subject to a frequency analysis.

3. Electromechanical steering system according to Claim 1 or 2, **characterized in that** the temperature of the surroundings of the vehicle and/or information about the quantity of rain are additionally taken into account.

4. Method for determining a status of the route of a motor vehicle by means of an electromechanical steering system, having a servo motor, at least one motor position sensor by means of which a rotor position of the servo motor is sensed, and an evaluation and control unit, wherein changes in the rotor position which occur independently of a driver's steering inputs are sensed by means of the motor position sensor (5), wherein a route status is classified on the basis of the changes which have occurred in the rotor position, and wherein the electromechanical steering system and/or other vehicle systems are adapted as a function of the status of the route which is determined, **characterized in that**, in addition to the changes which have occurred in the rotor position, the vehicle speed, the yaw rate and the hand steering torque of the driver are taken into account.

5. Method according to Claim 4, **characterized in that** the changes in the rotor position in time are subjected to a frequency analysis.

6. Method according to Claim 4 or 5, **characterized in that** the temperature of the surroundings of the vehicle and/or information about the quantity of rain are additionally taken into account.

## Revendications

1. Pilotage électromécanique, comprenant un servomoteur électrique, au moins un capteur de position du moteur permettant de détecter une position de rotor du servomoteur et une unité d'analyse et de commande, des variations dans la position de rotor étant détectées à l'aide du capteur de position du moteur (5), lesdites variations se produisant indépendamment des instructions de pilotage données par un conducteur, un état de voie de circulation étant classé à l'aide des variations survenues dans la position de rotor, le système de pilotage électromécanique (1) et/ou d'autres systèmes du véhicule étant adaptés en fonction de l'état de voie de circulation calculé, **caractérisé en ce qu'**en sus des variations se produisant dans la position de rotor, la vitesse du véhicule, la vitesse de lacet et le couple de pilotage manuel du conducteur sont pris en compte.

2. Pilotage électromécanique selon la revendication 1, **caractérisé en ce que** les variations dans le temps de la position de rotor sont soumises à une analyse de fréquence.

3. Pilotage électromécanique selon la revendication 1 ou 2, **caractérisé en ce qu'**en sus, la température de l'environnement du véhicule et/ou des informations sur la quantité de pluie sont prises en compte.

4. Procédé de détermination d'un état de voie de circulation d'un véhicule automobile, à l'aide d'un pilotage électromécanique doté d'un servomoteur, d'au moins un capteur de position du moteur permettant de détecter une position de rotor du servomoteur et d'une unité d'analyse et de commande, des variations dans la position de rotor étant détectées à l'aide du capteur de position du moteur (5), lesdites variations se produisant indépendamment des instructions de pilotage données par un conducteur, un état de voie de circulation étant classé à l'aide des variations survenues dans la position de rotor, le système de pilotage électromécanique et/ou d'autres systèmes du véhicule étant adaptés en fonction de l'état de voie de circulation calculé, **caractérisé en ce qu'**en sus des variations se produisant dans la position de rotor, la vitesse du véhicule, la vitesse de lacet et le couple de pilotage manuel du conducteur sont pris en compte.

5. Procédé selon la revendication 4, **caractérisé en ce que** les variations dans le temps de la position de rotor sont soumises à une analyse de fréquence.

6. Procédé selon la revendication 4 ou 5, **caractérisé en ce qu'**en sus, la température de l'environnement du véhicule et/ou des informations sur la quantité de pluie sont prises en compte.
